Europäisches Patentamt

European Patent Office

Office européen des brevets

(19)

(11) Veröffentlichungsnummer : **0 025 922**
**B1**

(12) # EUROPÄISCHE PATENTSCHRIFT

(45) Veröffentlichungstag der Patentschrift :
24.11.82

(21) Anmeldenummer : 80105330.7

(22) Anmeldetag : 06.09.80

(51) Int. Cl.³ : **A 01 B 45/00, A 01 G 1/12**

(54) **Rechen zur Bearbeitung von Rasen.**

(30) Priorität : 13.09.79 DE 2937034

(43) Veröffentlichungstag der Anmeldung :
**01.04.81 (Patentblatt 81/13)**

(45) Bekanntmachung des Hinweises auf die Patenterteilung : **24.11.82 Patentblatt 82/47**

(84) Benannte Vertragsstaaten :
**AT BE CH DE FR GB IT LI LU NL SE**

(56) Entgegenhaltungen :
**DE B 2 224 346**
**US A 2 178 288**
**US A 2 207 653**

(73) Patentinhaber : **GARDENA Kress + Kastner GmbH**
**Boschstrasse 5**
**D-7900 Ulm/Donau (DE)**

(72) Erfinder : **Katzer, Johann**
**Nebelhornweg 9**
**D-7910 Neu-Ulm (DE)**
Erfinder : **Sauer, Roland**
**Gerstnerstrasse 41**
**D-7900 Ulm-Gögglingen (DE)**
Erfinder : **Stephany, Christian**
**Biberacher Strasse 76**
**D-7900 Ulm-Wiblingen (DE)**
Erfinder : **Lopic, Franz**
**Marienstrasse 8**
**D-7911 Neu-Ulm-Burlafingen (DE)**

(74) Vertreter : **Patentanwälte Ruff und Beier**
**Neckarstrasse 50**
**D-7000 Stuttgart 1 (DE)**

# Rechen zur Bearbeitung von Rasen

Die Erfindung betrifft einen Rechen zur Bearbeitung von Rasen mit einem Zinkenträger, einer Stielhalterung und mindestens einem Rad, der mit Hilfe einer Schwenkeinrichtung zwischen einer Arbeitsstellung, in der die Zinken in das Erdreich eingreifen, und einer Ruhestellung, in der die Zinken aus dem Erdreich ausgerückt sind, verschwenkbar ist.

Solche Rechen dienen dazu, den Rasen auszukämmen, die Verfilzung zu beseitigen und Sauerstoff an die Graswurzel zu bringen. Mit ihnen wird pendelnd gearbeitet, d.h. beim Ziehen greifen die Zinken in das Erdreich ein, während sie beim Schieben des Rechens ausgerückt sind. Es ist bereits ein Rechen der eingangs genannten Art bekannt (DE-32-22 24 346), bei dem der Zinkenträger schwenkbar gegenüber dem Stiel gelagert ist und an den Enden des Zinkenträgers Radträger angeordnet sind, an denen Laufräder höhenverstellbar festleg-bar sind.

Der Erfindung liegt die Aufgabe zugrunde, bei einem Rechen der eingangs genannten Art bei einfachem Aufbau eine bessere Wirkungsweise zu erzielen. Zur Lösung dieser Aufgabe schlägt die Erfindung einen Rechen der eingangs gennanten Art vor, bei dem die Stielhalterung fest mit dem Zinkenträger verbindbar ist und die Schwenkeinrichtung aus einer an dem Zinkenträger zwischen zwei Endstellungen schwenkbar gelagerten Lagerschwinge für jedes Rad besteht, an deren freiem Ende das Rad drehbar gelagert ist.

Mit Hilfe dieser erfindungsgemäßen Ausgestaltung des Rechens wird es möglich, daß beim Übergang vom Ziehen des Rechens zum Schieben keine Verkippung der Zinken und damit auch keine Aushebelung von Teilen des Erdreichs erfolgt. Vielmehr werden die Zinken senkrecht aus dem Erdreich angehoben. Auch beim Übergang vom Schieben zum Ziehen erfolgt ein senkrechtes Absenken der Zinken und daher ein leichtes und störungsfreies Eindringen der Zinken in den Erdboden. Diese Vorteile werden durch das andersartige Grundprinzip des Schneid- oder Vertikutierrechens erreicht. Darüberhinaus erfolgt bei dieser Ausgestaltung das Anheben der Zinken durch den Rollwiderstand der Räder und nicht nur durch das Gleiten der Zinkenvorderkante auf dem Boden, so daß es durch entsprechende Anordnung der Endstellungen möglich wird, daß beim Schieben des Rechens die Unterkante der Zinken mit Abstand oberhalb des Erdbodens liegt, wodurch eine Schonung des Rasens und der Zinken erreicht wird.

In Weiterbildung schlägt die Erfindung vor, daß an dem Zinkenträger ein sich nach oben erstreckender Träger angeordnet ist, in dessen oberem Bereich die Lagerschwinge gelagert ist. Mit Hilfe dieser Ausgestaltung wird es möglich, relativ große Räder zu verwenden, was bei unebenem Boden die Bedienung des Rechens erleichtert.

Nach einem weiteren Merkmal der Erfindung ist an dem Träger eine Abdeckung für den Zinkenträger angeordnet. Damit wird eine Schutzeinrichtung vorgesehen, die Verletzungen beim unachtsamen Gebrauch des Rechens verhindern soll.

Weiterhin schlägt die Erfindung vor, daß der Träger an seiner Oberseite eine nach oben offene, etwa U-förmige, zur Aufnahme der Schwenkachse der Lagerschwinge bestimmte Ausnehmung aufweist, die nach oben von der angebrachten Abdeckung abgeschlossen ist. Dies ist eine ganz besonders einfach herzustellende Lagerung für die Schwenkachse der Lagerschwinge, die außerdem ein leichtes Auswechseln der Lagerschwinge ermöglicht.

Um die beiden Endstellungen, zwischen denen die Lagerschwinge verschwenkbar ist, und damit die Eindringtiefe der Zinken zu definieren, sind nach einem weiteren Merkmal der Erfindung an dem Träger Abwinkelungen als Anschläge zur Begrenzung der Schwenkbarkeit der Lagerschwinge angeordnet. Falls der Träger aus Blech geprägt ist, lassen sich diese Abwinkelungen einfach herstellen, ohne daß ein zusätzliches Bauteil benötigt wird.

Vorzugsweise sind nach einem weiteren Merkmal der Erfindung zwei Räder vorhanden und die Lagerschwingen und/oder die Träger im Bereich der Enden des Zinkenträgers angeordnet. Bei dieser Räderzahl schlägt die Erfindung weiterhin vor, daß die Lagerschwingen Endteile einer durchgehenden Kurbelachse sind. Damit wird ein gleichzeitiges, paralleles Verschwenken beider Räder ermöglicht.

In Weiterbildung schlägt die Erfindung vor, daß die Kurbelachse zwischen ihren Lagern in Richtung auf den Zinkenträger stufenartig abgewinkelt ist und in ihrem Mittelteil in der Nähe des Zinkenträgers, ggf. unter der Abdeckung verläuft. Damit wird eine geringere Bauhöhe des Gerätes erreicht, zumal dann, wenn die Abdeckung ebenfalls stufenförmig in Richtung auf den Zinkenträger abgewinkelt ist. Gleichzeitig bleibt die Kurbelachse unter der Abdeckung, so daß auch hier eine Verletzungsgefahr möglichst gering gehalten wird.

Weitere Merkmale, Einzelheiten und Vorzüge der Erfindung ergeben sich aus der folgenden Beschreibung einer bevorzugten Ausführungsform sowie anhand der Zeichnung. Hierbei zeigen :

Figur 1 eine teilweise geschnittene Vorderansicht eines erfindungsgemäßen Rechens mit aus dem Erdreich ausgerückten Zinken ;

Figur 2 einen Schnitt etwa nach Linie III-III in Fig. 1 durch einen Rechen in Arbeitsstellung ;

Figur 3 einen Schnitt nach Linie III-III in Fig. 1, wobei der Pfeil in Fig. 2 und 3 die jeweilige Bewegungsrichtung des Rechens anzeigt.

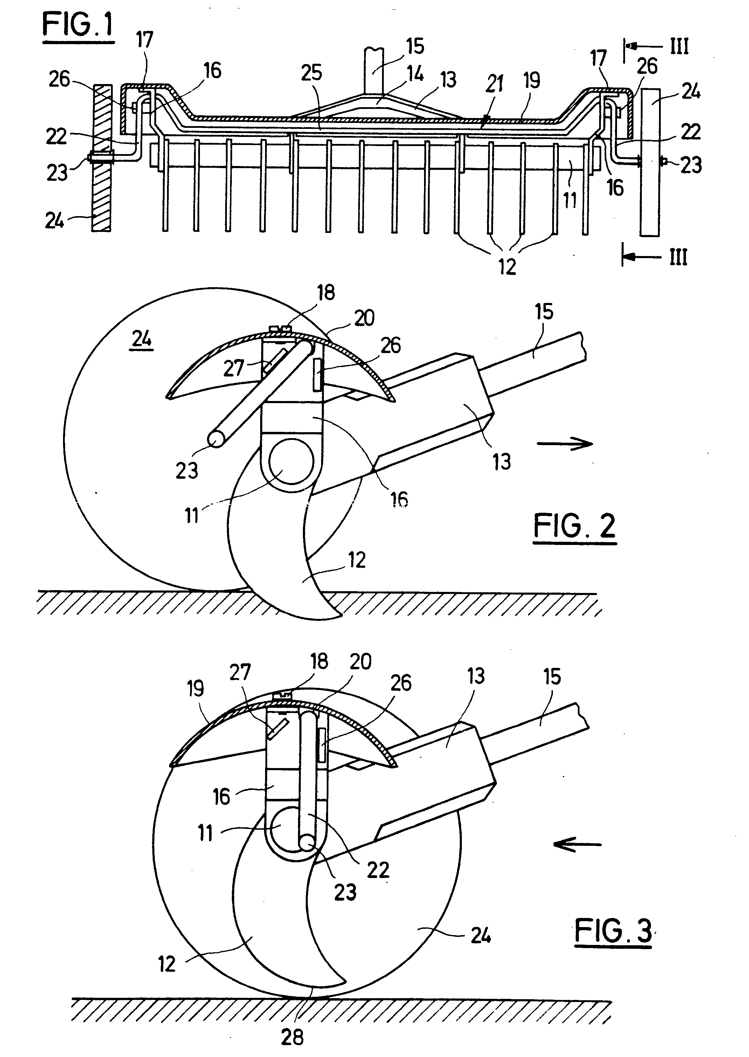

Der Rechen der Fig. 1 besteht aus einem Zinkenträger 11, an dem mehrere parallel verlaufende Zinken 12 mit gleichem Abstand und gleicher Länge angeordnet sind. Der Zinkenträger 11 ist in seinem mittleren Bereich mit einem Bügel 13 versehen, an dessen parallel zum Zinkenträger 11 verlaufenden Mittelteil 14 eine nicht näher dargestellte Stielhalterung 15 angebracht ist, ggf. mit üblicher Einstellbarkeit zur Anpassung an die Größe der Bedienungsperson.

An beiden Enden des Zinkenträgers 11 sind seitliche Träger 16 angeordnet, die vom Zinkenträger 11 nach oben verlaufen. Sie sind etwa oberhalb des Zinkenträgers 11 stufenförmig nach außen abgebogen, so daß sie wiederum senkrecht, aber etwas außerhalb des Zinkenträgers 11 nach oben verlaufen. In ihrem oberen Bereich sind die Träger 16 rechtwinklig nach außen abgebogen und bilden dadurch einen Absatz 17. Auf dem Absatz 17 ist mit Hilfe der Schraube 18 (siehe Fig. 2) eine Abdeckung 19 festgeschraubt. Diese Abdeckung verläuft von dem Absatz 17 des einen Trägers 16 längs des Zinkenträgers 11 bis zu dem Absatz 17 des anderen Trägers 16. Im mittleren Bereich ist die Abdeckung 19 in Richtung auf den Zinkenträger 11 abgewinkelt und verläuft parallel zu diesem in dessen Nähe.

Beide Träger 16 weisen an ihrem oberen Ende neben dem Absatz 17 eine Ausnehmung 20 auf, die von der Unterseite der Abdeckung 19 nach oben abgeschlossen ist.

In diese Ausnehmungen 20 ist eine Kurbelachse 21 eingelegt, die außerhalb der Träger 16 senkrecht zum Zinkenträger 11 verlaufende Abschnitte 22 aufweist, die wiederum rechtwinklig nach außen abgebogen sind, so daß sie parallel zueinander und zu der Längsachse des Zinkenträgers 11 verlaufende Endabschnitte 23 bilden. Diese Endabschnitte 23 dienen als Lagerzapfen für die Räder 24. In dem Bereich zwischen den beiden Trägern 16 ist die Kurbelachse 21 in Richtung auf den Zinkenträger 11 abgewinkelt, wobei sie von den Trägern 16 in Richtung auf den Zinkenträger zunächst schräg verläuft, während sie in ihrem mittleren Bereich 25 unterhalb der ebenfalls abgewinkelten Abdeckung 19 parallel zum Zinkenträger 11 verläuft.

Wie aus Fig. 2 hervorgeht, sind an dem Träger 16 zwei Abwinkelungen 26 bzw. 27 vorhanden, die Anschläge zur Begrenzung der Schwenkbarkeit der Abschnitte 22 der Kurbelachse 21 bilden. Bei der in Fig. 2 dargestellten Arbeitsstellung schlägt der Abschnitt 22 an der vorderen Abwinklung 27 an und definiert dadurch die Eindringtiefe der Zinken 12 in das Erdreich, während bei der in Fig. 3 dargestellten Ruhestellung der Abschnitt 22 der Kurbelachse 21 an dem hinteren Anschlag 26 anliegt. In dieser Stellung ist die Unterseite 28 der Zinken 12 etwas oberhalb des Erdbodens.

Die Wirkungsweise des erfindungsgemäßen Rechens wird nun beschrieben. Beim Ziehen des Rechens bleiben die Räder 24 hinter der Bewegung zurück, bis die Abschnitte 22 der Kurbelachse 21 an den Anschlägen 27 anschlagen. Daher dringen die Zinken 12 in den Erdboden ein. Beim Ziehen erfolgt daher eine Auflockerung des Erdbodens. Beim Schieben gleiten die Zinken 12 längs ihrer Unterseite 28 aus dem Erdreich heraus, während die Räder 24 auf dem Erdboden bleiben. Daher schwenken die Räder 24 um die Ausnehmung 20 so lange, bis die Abschnitte 22 der Kurbelachse 21 an den Anschlägen 26 anschlagen.

Dies ist die Stellung, wie sie in Fig. 3 dargestellt ist. Bei dieser Schiebebewegung sind die Unterseiten 28 der Zinken 12 etwas oberhalb des Erdbodens.

Es ist aus den Figuren, insbesondere Fig. 2 und Fig. 3 zu sehen, daß durch entsprechende Auswahl des Raddurchmessers, der Länge der Abschnitte 22 der Kurbelachse 21, des Abstandes zwischen der Mittelachse des Zinkenträgers 11 und der Ausnehmung 20, sowie des durch die Abwinklungen 26 und 27 gebildeten Schwenkbereiches sowohl die Eindringtiefe der Zinken 12 in den Erdboden, als auch der Abstand der Unterseiten 28 der Zinken 12 vom Erdboden beim Schieben des Rechens bestimmt werden können. Damit wird es ermöglicht, den Rechen je nach den Erfordernissen des Einzelfalls entsprechend auszubilden, so daß er für alle denkbaren Betriebsarten Verwendung finden kann.

Soll der Rechen für verschiedene Eindringtiefen verwendbar gemacht werden, können beispielsweise die Anschläge zur Begrenzung der Verschwenkbarkeit der Lagerschwinge einstellbar ausgeführt werden, z.B. mit Hilfe von Verstellschrauben.

Wenn der Rechen mit einem Rad verwendet werden soll, ist dieses vorzugsweise in der Mitte des Zinkenträgers an einer Lagerschwinge angebracht. Das gleiche gilt für das mittlere von drei Rädern.

Die Befestigung der Zinken geschieht dadurch, daß diese auf ein Vierkantrohr aufgeschoben und mit Abstandrollen auf Distanz gehalten werden. Das auf beiden Seiten herausstehende Rohrende wird nach Aufstecken der jeweils letzten Zinke umgeschlagen und festgepreßt. Durch diese Umbördelung wird eine sichere Befestigung der Zinken erreicht.

**Ansprüche**

1. Rechen zur Bearbeitung von Rasen mit einem Zinkenträger (11), einer Stielhalterung (15) und mindestens einem Rad (24), der mit Hilfe einer Schwenkeinrichtung zwischen einer Arbeitsstellung, in der die Zinken (12) in das Erdreich eingreifen, und einer Ruhestellung, in der die Zinken (12) aus dem Erdreich ausgerückt sind, verschwenkbar ist, dadurch gekennzeichnet, daß die Stielhalterung (15) fest mit dem Zinkenträger (11) verbindbar ist und die Schwenkeinrichtung aus einer an dem Zinkenträger (11) zwischen zwei Endstellungen schwenkbar gelagerten Lagerschwinge (21) für jedes Rad (24) besteht, an deren freiem Ende (23) das Rad (24) drehbar gelagert ist.

2. Rechen nach Anspruch 1, dadurch gekennzeichnet, daß an dem Zinkenträger (11) ein sich nach oben erstreckender Träger (16) angeordnet ist, in dessen oberem Bereich die Lagerschwinge gelagert ist.

3. Rechen nach Anspruch 1 oder 2, dadurch gekennzeichnet, daß an dem Träger (16) eine Abdeckung (19) für den Zinkenträger (11) angeordnet ist.

4. Rechen nach Anspruch 3, dadurch gekennzeichnet, daß der Träger (16) an seiner Oberseite eine nach oben offene, etwa U-förmige, zur Aufnahme der Schwenkachse der Lagerschwinge bestimmte Ausnehmung (20) aufweist, die nach oben von der angebrachten Abdeckung (19) abgeschlossen ist.

5. Rechen nach einem der Ansprüche 2 bis 4, dadurch gekennzeichnet, daß an dem Träger (16) Abwinklungen (26, 27) als Anschläge zur Begrenzung der Schwenkbarkeit der Lagerschwinge angeordnet sind.

6. Rechen nach einem der Ansprüche 1 bis 5, dadurch gekennzeichnet, daß zwei Räder (24) vorhanden sind und die Lagerschwingen und/oder die Träger (16) im Bereich der Enden des Zinkenträgers (11) angeordnet sind.

7. Rechen nach Anspruch 6, dadurch gekennzeichnet, daß die Lagerschwingen Abschnitte (22) einer durchgehenden Kurbelachse (21) sind.

8. Rechen nach Anspruch 7, dadurch gekennzeichnet, daß die Kurbelachse (21) zwischen ihren Lagern in den Trägern (16) in Richtung auf den Zinkenträger (11) stufenartig abgewinkelt ist und in ihrem Mittelteil (25) in der Nähe des Zinkenträgers (11), ggf. unter der Abdeckung (19) verläuft.

## Claims

1. Rake for working lawns with a tine carrier (11), a handle mounting support (15) and at least one wheel (24), which can be pivoted by means of a pivoting device between a working position in which the tines (12) engage in the ground and a rest position which the tines (12) are disengaged from the ground, characterized in that the handle mounting support (15) can be fixed to the tine carrier (11) and the pivoting device comprises a bearing arm (21) for each wheel (24) pivotably mounted on the tine carrier (11) between two end positions and on whose free end (23) is rotatably mounted wheel (24).

2. Rake according to claim 1, characterized in that an upwardly directed support (16) is positioned on tine carrier (11) and the bearing arm is mounted in the upper area thereof.

3. Rake according to claims 1 or 2, characterized in that a cover (19) for tine carrier (11) is arranged on support (16).

4. Rake according to claim 3, characterized in that on its top support (16) has an upwardly open, approximately U-shaped recess (20) for receiving the bearing arm pivot pin and which is closed at the top by the fitted cover (19).

5. Rake according to one of the claims 2 to 4, characterized in that bends (26, 27) are provided on support (16) as abutments for limiting the pivotability of the bearing arm.

6. Rake according to one of the claims 1 to 5, characterized in that there are two wheels (24) and the bearing arms and/or support (16) are arranged in the vicinity of the ends of tine carrier (11).

7. Rake according to claim 6, characterized in that the bearing arms are portions (22) of a through crankshaft (21).

8. Rake according to claim 7, characterized in that the crankshaft (21) is bent in step-like manner in the direction of tine carrier (11) between its bearings in support (16) and in its central portion (25) passes in the vicinity of tine carrier (11), optionally beneath cover (19).

## Revendications

1. Râteau pour travailler le gazon, muni d'un support de dents (11), d'un manche (15) et d'au moins une roue (24), ce râteau pouvant être déplacé par pivotement, à l'aide d'un dispositif de pivotement, entre une position fonctionnelle dans laquelle les dents (12) pénètrent dans la terre et une position de repos dans laquelle les dents (12) sont sorties de terre, caractérisé en ce que le manche (15) peut être relié de façon fixe au support de dents (11) et en ce que le dispositif de pivotement est constitué, pour chaque roue (24), d'une biellette qui est supportée par le support de dents (11) de façon à pouvoir pivoter entre deux emplacements extrêmes, et à l'extrémité libre (23) de laquelle la roue (24) est montée tournante.

2. Râteau selon la revendication 1, caractérisé en ce que sur le support de dents (11) est disposé un support (16) s'étendant vers le haut, dans la partie supérieure duquel est située la biellette.

3. Râteau selon la revendication 1 ou 2, caractérisé en ce que sur le support (16) est disposée une pièce de recouvrement (19) pour le support de dents (11).

4. Râteau selon la revendication 3, caractérisé en ce que le support (16) présente sur son côté supérieur un évidement (20) ouvert vers le haut, sensiblement en forme de U et destiné à recevoir l'axe de pivotement de la biellette, et qui est fermé vers le haut par la pièce de recouvrement (19).

5. Râteau selon l'une quelconque des revendications 2 à 4, caractérisé en ce que sur le support (16) sont disposées des pattes (26, 27) constituant des butées pour limiter le pivotement de la biellette.

6. Râteau selon l'une quelconque des revendications 1 à 5, caractérisé en ce que sont prévues deux roues (24) et en ce que les biellettes et/ou les supports (16) sont disposés dans la zone des extrémités du support de dents (11).

7. Râteau selon la revendication 6, caractérisé en ce que les biellettes sont des sections (22) d'un axe coudé continu (21).

8. Râteau selon la revendication 7, caractérisé en ce que l'axe (21) est coudé en gradins entre les biellettes, dans le support (16), en direction du support de dents (11), et en ce que dans sa partie centrale (25) il s'étend au voisinage du support de dents (11), éventuellement sous la pièce de recouvrement (19).

0 025 922

FIG.1

FIG. 2

FIG.3